# EUROPEAN PATENT APPLICATION

(11) **EP 4 810 810 A1**
(43) Date of publication of application: **23.09.2026**
(21) Application number: 26163851.4
(22) Date of filing: 11.03.2026
(51) Int. Cl.: F16C 17/02

(54) **SLIDE BEARING DEVICE FOR A ROTATING SHAFT OF A VEHICLE DRIVING MOTOR**

(30) Priority: 18.03.2025 JP 2025043942
(71) Applicant: Daido Metal Company Ltd., Nagoya (JP)
(72) Inventor: OZAWA, Yoshihiro, Inuyama-shi (JP); MAITANI, Shinya, Inuyama-shi (JP)
(74) Representative: Kraus & Lederer PartGmbB

(57) **Abstract**

There is provided a slide bearing device (10) for a rotating shaft (6) of a vehicle driving motor (1) that can supply a sufficient amount of lubricant (L) to a sliding surface without performing forcible oil supply, and can suppress generation of vibration and noise while sufficiently cooling the sliding surface and a vicinity thereof. A metal substrate (10A) includes an opening path (11) communicating between an inner peripheral surface (10b) and an outer peripheral surface (10a). A housing (2) includes a communication path (21) having one opening (21a) communicating with the opening path (11) of the metal substrate (10A) on the outer peripheral surface (10a) side and another opening (21b) that opens to an outside or an inside of the housing (2). The opening path (11) of the metal substrate (10A) and the communication path (21) of the housing (2) are provided in directions, positions, and sizes optimized to a gravity acting direction (G).

## Description

### BACKGROUND OF THE INVENTION

### (1) FIELD OF THE INVENTION

The present invention relates to a slide bearing device for rotatably supporting a rotating shaft of a vehicle driving motor.

### (2) DESCRIPTION OF RELATED ART

In a motor generating rotation power, a bearing for rotatably supporting a rotating shaft of the motor is generally used. The motor is used for driving various kinds of machines, for example, for driving a vehicle. Such a motor includes, for example, a housing, a stator including a coil, a rotor including a magnet, a rotating shaft connected to the rotor, and a bearing provided in a housing so as to support the rotating shaft and disposed in a bearing holding hole of the housing.

In the motor as described above, the stator is disposed outside the rotating shaft, and the rotor connected to the rotating shaft is disposed inside the stator in the housing. In such a configuration, when the coil of the stator is energized, the coil generates a magnetic field, the rotor rotates by interaction of the magnetic field generated by the coil and a magnetic field generated by the magnet of the rotor, and accordingly, the rotating shaft rotates. Further, by outputting the rotation power by the rotating shaft to the outside, the rotation power can be used as power for driving the vehicle and the like as described above.

The motor mounted on an electric vehicle in order to drive the vehicle is driven by, for example, an inverter system (for example, see JP-A-2022-146253). In a case where the motor is driven by the inverter system as disclosed in JP-A-2022-146253, a rotation speed of the rotating shaft can be changed by changing a frequency of a power supply that energizes the coil.

Further, in the vehicle driving motor disclosed in JP-A-2022-146253, a rolling bearing is used as a bearing for supporting the rotating shaft. Oil supplied from an outside is stirred and splashed with rotation of the rotating shaft, and a part of the splashed oil reaches the rolling bearing to cool and lubricate the rolling bearing.

Further, there is proposed a vehicle driving device (vehicle driving motor) having a configuration in which liquid refrigerant supplied to an axial center oil path of a hollow rotating shaft is sprayed from holes provided in a radial direction of the rotating shaft to an inside of a motor case by centrifugal force with rotation of the rotating shaft (for example, see JP-A-2023-64742). In the vehicle driving device disclosed in JP-A-2023-64742, the coil of the rotor is cooled by the liquid refrigerant supplied into the motor case. In addition, the supplied liquid refrigerant is stirred and splashed by rotation of the rotating shaft, and a part of the splashed liquid refrigerant reaches the rolling bearing to cool and lubricate the rolling bearing.

Further, to reduce vibration and noise generated from the bearing in a rotating machine, a slide bearing that hardly generates vibration as compared with the rolling bearing and is excellent in noise reduction has been adopted. As such a slide bearing, for example, there is a slide bearing provided in a rotating machine such as a steam turbine installed in a power generation facility (for example, see JP-A-2010-216522). In a two-arc bearing lubricant system disclosed in JP-A-2010-216522, a lubricant passage hole for supplying lubricant to a slide surface is provided, and the supplied lubricant interposes in a bearing clearance (oil clearance) between the rotating shaft and the slide bearing with rotation of the rotating shaft. As a result, the rotating shaft is rotatably supported.

### BRIEF SUMMARY OF THE INVENTION

As disclosed in JP-A-2022-146253 and JP-A-2023-64742, the rolling bearing is generally adopted as the bearing for supporting the rotating shaft in the vehicle driving motor, and the rolling bearing is lubricated by the lubricant supplied from a side surface between an outer ring and an inner ring. On the other hand, the rolling bearing has a bearing structure using a rolling element such as a ball, and has concern about noise. Therefore, in terms of quietness and the like inside an automobile, achievement of noise reduction of the vehicle driving motor is important. Thus, in the vehicle driving motor, similar to various kinds of rotating machines used at high rotation speed, in place of the rolling bearing used in the prior art, adoption of the slide bearing that hardly generates vibration and noise as compared with the rolling bearing is considered.

The vehicle driving motor used in the electric vehicle and the like is considered to be further downsized and increased in rotation speed as future trends. Therefore, adopting the slide bearing in place of the rolling bearing has a great advantage in terms of suppression of generation of noise and vibration caused by high rotation speed.

However, in a case where the rolling bearing is simply replaced with the slide bearing, even when the lubricant is supplied from the bearing clearance of the bearing side surface in a manner similar to the rolling bearing, it may be difficult to supply the lubricant to the bearing clearance because the bearing clearance of the slide bearing is extremely narrow. In such a case, an oil supply amount to the bearing clearance becomes insufficient, and it is difficult to achieve sufficient cooling action. Thus, seizing may occur on the sliding surface, and furthermore, characteristics of the vehicle driving motor are deteriorated.

Further, in a case where the lubricant is supplied from the bearing clearance of the slide bearing side surface by the above-described supply method, collision occurs between the supplied lubricant and the discharged lubricant because the bearing clearance to be supplied with the lubricant is also used to discharge the lubricant. As a result, lubricant replacement efficiency is extremely lowered, and it is difficult to supply a desired amount of lubricant at a desired speed.

On the other hand, the slide bearing used in various kinds of rotating machines under high-speed rotation is extremely large in heat generation amount by friction, and requires a large amount of lubricant. Therefore, forcible oil supply by a force-feed pump or the like is often adopted. As described above, in a case where the configuration for supplying the lubricant to the sliding surface of the slide bearing with the rotating shaft by forcible oil supply is adopted, a sufficient oil supply amount is realized, and an excellent oil film on the sliding surface can be maintained. This makes it possible to suppress heat generation on the sliding surface, and to sufficiently cool the sliding surface. To forcibly supply the lubricant to the slide bearing in various kinds of rotating machines as described above, for example, a method of supplying the lubricant by applying oil pressure to oil paths provided in the housing and the slide bearing, or a method of directly supplying the lubricant to the sliding surface through the rotating shaft internally including an oil path is adopted.

However, in a case where the above-described configuration for forcibly supplying the lubricant to the slide bearing is applied to a vehicle driving motor, the structure becomes complicated because of addition of the oil path for supplying the lubricant up to the slide bearing, upsizing of a pump for forcibly supplying the lubricant, and the like, which increases a manufacturing cost.

Therefore, to adopt the slide bearing in the vehicle driving motor to improve noise reduction, and to improve cooling performance of the sliding surface between the rotating shaft and the slide bearing, a method that can achieve a sufficient oil supply amount with a simple configuration has been earnestly desired.

The present invention has been made in consideration of the above-described issues, and an object of the present invention is to provide a slide bearing device for a rotating shaft of a vehicle driving motor that can supply a sufficient amount of lubricant to a sliding surface without performing forcible oil supply, and can suppress generation of vibration and noise while sufficiently cooling the sliding surface and a vicinity thereof.

The present inventors have diligently studied to solve the above-described issues. As a result, the inventors have devised to provide an opening path communicating between an inner peripheral surface serving as the sliding surface and an outer peripheral surface in a metal substrate supporting the rotating shaft of the vehicle driving motor, to provide, in a housing, a communication path that has one opening communicating with the opening path of the metal substrate and another opening that opens to the outside or the inside of the housing, and to provide these paths in optimized directions, positions, and sizes. As a result, the inventors have found that the lubricant used to lubricate the sliding surface is sequentially discharged from the metal substrate through the opening path and the communication path, and therefore, the lubricant newly supplied can be efficiently introduced into the lubricant supply path that is the bearing clearance between the inner peripheral surface of the metal substrate and the outer peripheral surface of the rotating shaft. In such a manner, the inventors have completed the present invention.

The present invention provides a slide bearing device for rotatably supporting a rotating shaft of a vehicle driving motor, which includes: a metal substrate having a cylindrical shape and including an inner peripheral surface, an outer peripheral surface, and two axial end surfaces; a housing including one or more bearing holding holes each holding the metal substrate, and capable of internally housing a rotor, a stator and at least a part of the rotating shaft provided in the vehicle driving motor; and a lubricant inlet portion to introduce lubricant from an outside to an inside of the housing, in which the metal substrate includes one or more opening paths provided to communicate between the inner peripheral surface and the outer peripheral surface, the housing includes one or more communication paths each having one opening communicating with the corresponding opening path of the metal substrate on the outer peripheral surface side and another opening that opens to the outside or the inside of the housing, a lubricant supply path to supply the lubricant introduced to the inside of the housing by the lubricant inlet portion toward the inner peripheral surface serving as a bearing sliding surface is secured between the inner peripheral surface of the metal substrate and an outer peripheral surface of the rotating shaft, when the metal substrate is disposed to cause a center axis of the metal substrate to intersect a plane perpendicular to a gravity acting direction at an angle of 10 degrees or less, an axis of each of the opening paths is disposed within a range of an angle around the center axis of 90 degrees from a gravity line along the gravity acting direction, and each of the opening paths is disposed near a center part in a width direction along an axis direction of the metal substrate, each of the communication paths provided in the housing is provided to cause an entire path from the one opening toward the other opening not to be directed to a direction opposite to the gravity acting direction, and a minimum diameter B of a cross-section perpendicular to an axis direction of each of the opening paths of the metal substrate and a minimum diameter R of a cross-section perpendicular to an axis direction of the corresponding communication path of the housing satisfy relationship represented by the following expression (1). $B \leq 2 R$

In the above-described aspect, the slide bearing device for the rotating shaft of the vehicle driving motor according to the present invention more preferably adopts a configuration in which the minimum diameter B of each of the opening paths of the metal substrate and the minimum diameter R of the corresponding communication path of the housing satisfy relationship represented by the following expression (2). $B \leq R$

In the above-described aspect, in the slide bearing device for the rotating shaft of the vehicle driving motor according to the present invention, the axis of each of the opening paths of the metal substrate is more preferably disposed within a range of the angle around the center axis of 60 degrees from the gravity line along the gravity acting direction.

In the above-described aspect, in the slide bearing device for the rotating shaft of the vehicle driving motor according to the present invention, the axis of each of the opening paths of the metal substrate is further preferably disposed within a range of the angle around the center axis of 45 degrees from the gravity line along the gravity acting direction.

In the above-described aspect, the slide bearing device for the rotating shaft of the vehicle driving motor according to the present invention may adopt a configuration in which the lubricant inlet portion supplies the lubricant toward the rotating shaft of the vehicle driving motor disposed inside the housing by spraying, dripping, or continuously pouring the lubricant.

In the above-described aspect, the slide bearing device for the rotating shaft of the vehicle driving motor according to the present invention can adopt a configuration in which the lubricant inlet portion at least includes oil jetting means disposed inside the housing, and the lubricant is supplied by spraying the lubricant to the rotating shaft of the vehicle driving motor by the oil jetting means.

In the above-described aspect, the slide bearing device for the rotating shaft of the vehicle driving motor according to the present invention can adopt a configuration in which the lubricant inlet portion at least includes a gutter-shaped member disposed inside the housing and to which the lubricant is introduced from the outside, and the gutter-shaped member is disposed at a position opposite to the gravity acting direction as viewed from the rotating shaft of the vehicle driving motor with respect to the rotating shaft, and includes one or more outflow ports disposed at positions for supplying the lubricant toward the rotating shaft and the rotor by dripping or continuously pouring the lubricant.

In the above-described aspect, the slide bearing device for the rotating shaft of the vehicle driving motor according to the present invention can adopt a configuration in which the lubricant inlet portion at least includes a lubricant supply pipe disposed inside the housing and to which the lubricant is introduced from the outside, and the lubricant supply pipe is disposed at a position opposite to the gravity acting direction as viewed from the rotating shaft of the vehicle driving motor with respect to the rotating shaft, and includes one or more outflow ports disposed at positions for supplying the lubricant toward the rotating shaft and the rotor by dripping or continuously pouring the lubricant.

In the above-described aspect, the slide bearing device for the rotating shaft of the vehicle driving motor according to the present invention can adopt a configuration in which the rotating shaft of the vehicle driving motor has a hollow shape, and an internal space of the rotating shaft serves as an axial center flow path through which the lubricant flows, and the rotating shaft at least includes an inlet port provided on one end side to introduce the lubricant from the lubricant inlet portion to the axial center flow path, and an outflow port opening from the axial center flow path toward the outer peripheral surface of the rotating shaft and causing the lubricant introduced to the axial center flow path to flow out by centrifugal force with rotation of the rotating shaft to pour and supply the lubricant to the outer peripheral surface of the rotating shaft.

In the above-described aspect, the slide bearing device for the rotating shaft of the vehicle driving motor according to the present invention can adopt a configuration in which the other openings of the communication paths of the housing open to the inside of the housing, the lubricant supplied to the inner peripheral surface of the metal substrate is discharged to the inside of the housing through the opening paths and the communication paths and is stored in the inside of the housing, a redundant part of the lubricant supplied from the lubricant inlet portion toward the rotating shaft of the vehicle driving motor falls into and stored in the housing, and a part of the lubricant stored in the inside of the housing is splashed with rotation of the rotor and the rotating shaft provided in the vehicle driving motor, and is resupplied toward the inner peripheral surface of the metal substrate to realize circulation of the lubricant.

Note that the gravity acting direction described in the present specification indicates a direction that is generally called a vertical direction on which the gravity acts. In the present specification, since the slide bearing device for the rotating shaft of the vehicle driving motor according to the present invention is to be mounted on a vehicle such as an electric vehicle, and there are a case where the slide bearing device for the rotating shaft of the vehicle driving motor is mounted to have slight inclination and a case where a vehicle itself is inclined, the direction is referred to as the gravity acting direction as described above.

Further, the gravity line described in the present specification indicates a line along the above-described gravity acting direction, and indicates a direction of the gravity acting on an object on earth, namely, a line connecting an object present on the ground and a center of the earth.

Further, the gutter-shaped member described in the present specification indicates a member that has a substantially U-shaped cross-section or a substantially C-shaped cross-section, and opens in a direction opposite to the gravity acting direction, and indicates, for example, a member that allows liquid and the like to flow through an inside thereof.

As described above, the slide bearing device for the rotating shaft of the vehicle driving motor according to the present invention adopts the configuration in which the metal substrate includes the opening paths communicating between the inner peripheral surface and the outer peripheral surface, the housing includes the communication paths each having the one opening communicating with the corresponding opening path of the metal substrate on the outer peripheral surface side and the other opening that opens to the outside or the inside of the housing, and the opening paths of the metal substrate and the communication paths of the housing are provided in directions, positions, and sizes optimized to the gravity acting direction.

As a result, the lubricant used to lubricate the inner peripheral surface of the metal substrate serving as the sliding surface is sequentially discharged from the metal substrate through the opening paths and the communication paths. Therefore, the lubricant newly supplied can be efficiently introduced to the lubricant supply path that is the bearing clearance between the inner peripheral surface of the metal substrate and the outer peripheral surface of the rotating shaft.

Accordingly, it is possible to realize the slide bearing device that can supply a sufficient amount of lubricant to the sliding surface without performing forcible oil supply, and can suppress generation of vibration and noise while sufficiently cooling the sliding surface and a vicinity thereof.

Other objects, features, and advantages of the present invention will become apparent from the following description of the embodiment of the present invention with reference to accompanying drawings.

### BRIEF DESCRIPTION OF THE SEVERAL VIEWS OF THE DRAWING

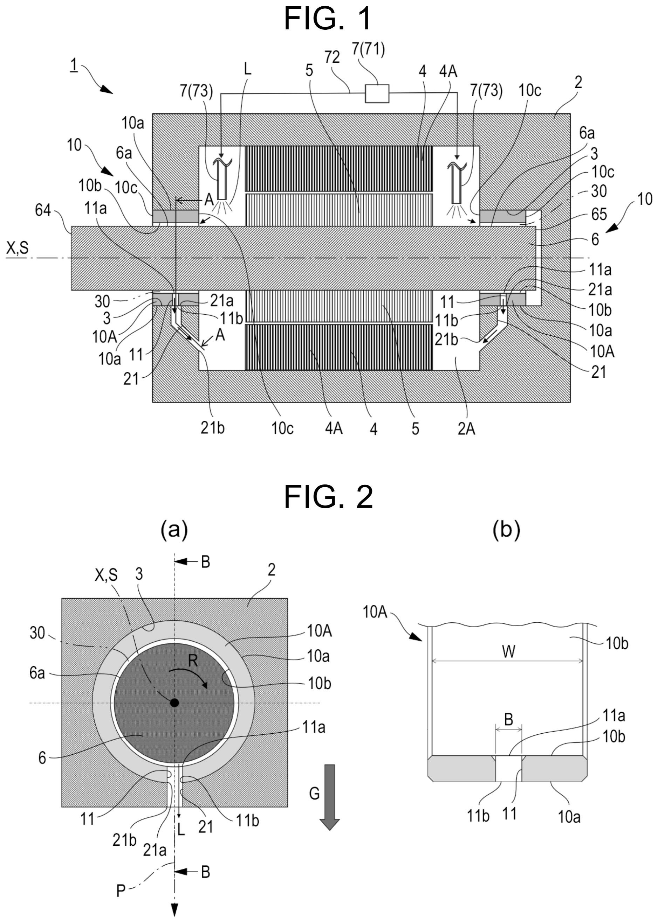

Fig. 1 is a diagram schematically illustrating an embodiment of a slide bearing device for a rotating shaft of a vehicle driving motor according to the present invention, and is a cross-sectional view taken along an axial direction of a metal substrate constituting a slide bearing, illustrating an example of the vehicle driving motor in which the metal substrate is held by a housing;
Fig. 2 is a diagram schematically illustrating the embodiment of the slide bearing device for the rotating shaft of the vehicle driving motor according to the present invention, where Fig. 2A is a cross-sectional view taken along line A-A illustrated in Fig. 1, and Fig. 2B is a cross-sectional view taken along line B-B illustrated in Fig. 2A;

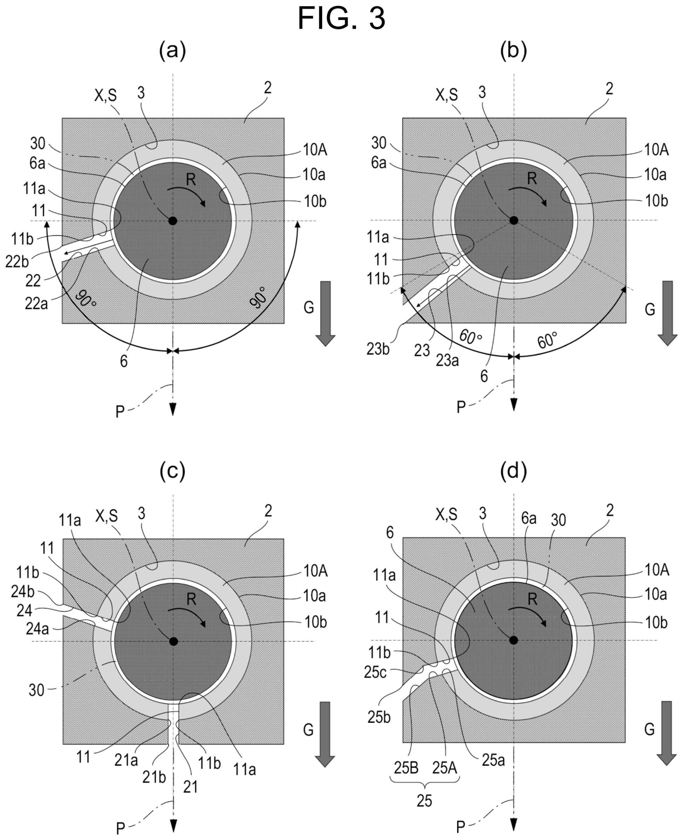

Fig. 3 is a diagram schematically illustrating the embodiment of the slide bearing device for the rotating shaft of the vehicle driving motor according to the present invention, where Figs. 3A to 3D are cross-sectional views each illustrating other examples of directions and positions of an opening path provided in the metal substrate and a communication path provided in the housing;

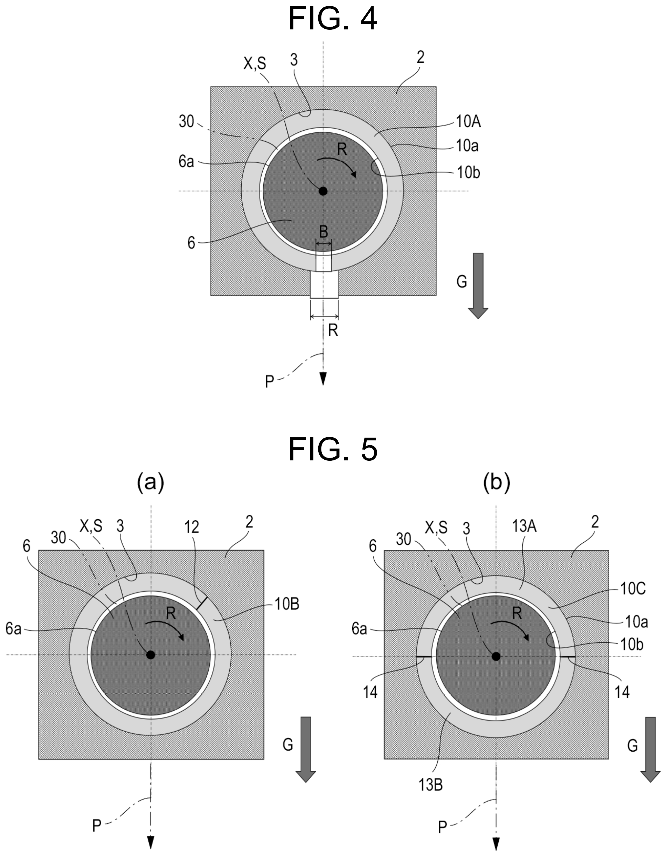

Fig. 4 is a diagram schematically illustrating the embodiment of the slide bearing device for the rotating shaft of the vehicle driving motor according to the present invention, and is a cross-sectional view illustrating an outline of relationship between a minimum diameter B of the opening path in the metal substrate and a minimum diameter R of the communication path in the housing;
Fig. 5 is a diagram schematically illustrating the embodiment of the slide bearing device for the rotating shaft of the vehicle driving motor according to the present invention, where Figs. 5A and 5B are cross-sectional views each illustrating an outline of another example of the metal substrate;

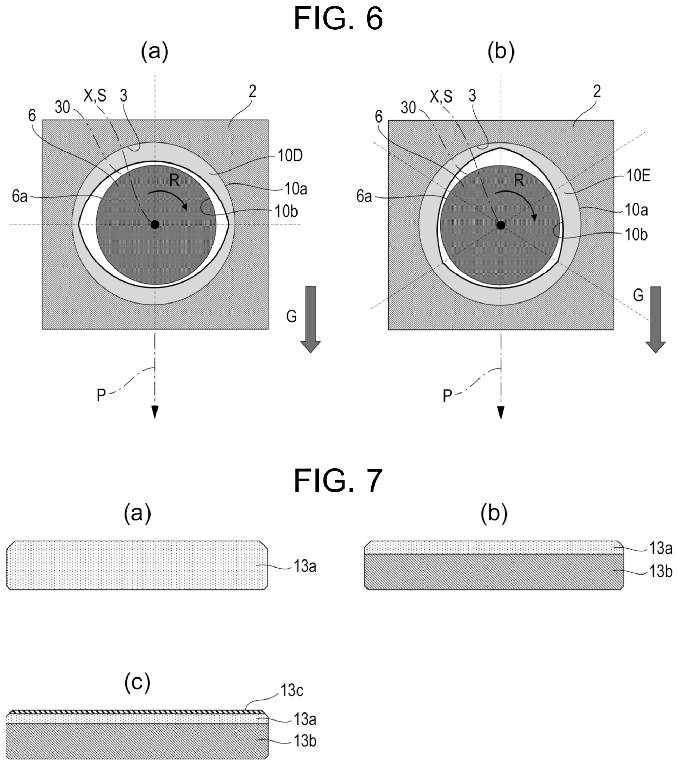

Fig. 6 is a diagram schematically illustrating the embodiment of the slide bearing device for the rotating shaft of the vehicle driving motor according to the present invention, where Figs. 6A and 6B are cross-sectional views each illustrating an outline of still another example of the metal substrate;
Fig. 7 is a diagram schematically illustrating the embodiment of the slide bearing device for the rotating shaft of the vehicle driving motor according to the present invention, where Figs. 7A to 7C are partial cross-sectional views each illustrating an outline of an example of a layer structure of the metal substrate; and

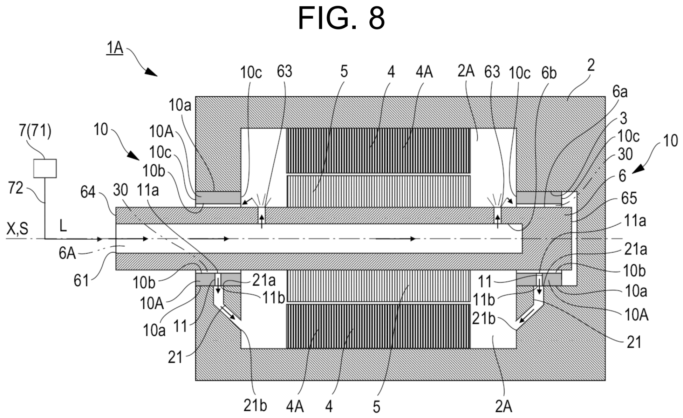

Fig. 8 is a diagram schematically illustrating the embodiment of the slide bearing device for the rotating shaft of the vehicle driving motor according to the present invention, and is a cross-sectional view taken along the axial direction of the metal substrate, illustrating another example of the vehicle driving motor in which the metal substrate is held by the housing.

### DETAILED DESCRIPTION OF THE INVENTION

An embodiment of a slide bearing device for a rotating shaft of a vehicle driving motor according to the present invention is described in detail with reference to drawings as appropriate.

In the drawings used in the following description, in order to facilitate understanding of characteristics of the slide bearing device for the rotating shaft of the vehicle driving motor according to the present invention, characteristic portions may be slightly enlarged for convenience, and dimensional proportions and the like of components may be different from actual dimensional proportions and the like. Further, materials, dimensions, and the like provided in the following description are illustrative, and the present invention is not limited thereto and can be implemented by being appropriately changed within a range where the gist of the present invention is not changed.

In the present specification, for example, terms such as "orthogonal" and "direction", and values of a length, an angle, and the like for specifying shapes, geometric conditions, and degrees thereof are not limited to strict meanings, and are interpreted to include a range where similar functions can be expected.

In the present specification, in a case where a plurality of candidates for an upper limit value and a plurality of candidates for a lower limit value regarding a certain parameter are given, a numerical range of the parameter may be a combination of one optional candidate for the upper limit value and one optional candidate for the lower limit value.

### <Configurations of Vehicle Driving Motor and Slide Bearing Device for Rotating Shaft thereof>

Fig. 1 is a diagram schematically illustrating a slide bearing device 10 for a rotating shaft of a vehicle driving motor (hereinafter, simply referred to as slide bearing device in some cases) according to the present embodiment, and is a cross-sectional view taken along an axial direction X of a metal substrate 10A constituting the slide bearing device 10, illustrating an entire vehicle driving motor 1 in which the metal substrate 10A is held by a housing 2. Fig. 2A is a cross-sectional view taken along line A-A illustrated in Fig. 1, and Fig. 2B is a cross-sectional view taken along line B-B illustrated in Fig. 2A.

Figs. 3A to 3D are cross-sectional views each illustrating other examples of directions and positions of an opening path 11 provided in the metal substrate 10A and a communication path 21 provided in the housing 2.

Fig. 4 is a cross-sectional view illustrating an outline of relationship between a minimum diameter B of the opening path 11 in the metal substrate 10A and a minimum diameter R of the communication path 21 in the housing 2.

Figs. 7A to 7C are partial cross-sectional views each illustrating an outline of an example of a layer structure of the metal substrate.

Fig. 8 is a cross-sectional view taken along the axial direction X of the metal substrate 10A, illustrating another example of an entire vehicle driving motor 1A in which the metal substrate 10A is held by the housing 2.

As illustrated in Fig. 1, the slide bearing device 10 according to the present embodiment rotatably supports a rotating shaft 6 of the vehicle driving motor 1, and includes the metal substrate 10A, the housing 2, and a lubricant inlet portion 7.

The vehicle driving motor 1 in which the slide bearing device 10 according to the present embodiment is provided further includes a stator 4, a rotor 5, and the rotating shaft 6 that are entirely or partially housed in the housing 2. The vehicle driving motor 1 can transmit rotation power to an outside because at least the other end 64 side of the rotating shaft 6 is exposed from the housing 2.

Further, as illustrated in the cross-sectional views of Fig. 2, the slide bearing device 10 includes the metal substrate 10A having a substantially cylindrical shape, and is configured such that the rotating shaft 6 of the vehicle driving motor 1 passes through an inner peripheral surface 10b side of the cylindrical shape. An axial direction X and a center axis S of the cylindrical shape of the slide bearing device 10 are coincident with an axial direction X and a center axis S of the rotating shaft 6 of the vehicle driving motor 1, and are described by being denoted by the same reference numerals in the present specification. The inner peripheral surface 10b side of the cylindrical shape of the metal substrate 10A of the slide bearing device 10 serves as a sliding surface supporting the rotating shaft 6. Although detailed illustration is omitted in Fig. 2 and other drawings, a space between the inner peripheral surface 10b constituting the slide bearing device 10 and the rotating shaft 6 is filled with lubricant L, or an amount of lubricant L enabling smooth sliding is present in the space.

Examples of a vehicle driven by the vehicle driving motor 1 include an electric vehicle and a railroad vehicle. The vehicle driving motor to which the slide bearing device 10 according to the present embodiment is applied is an oil-cooled motor using lubricant.

In the present embodiment, as described above, as the slide bearing device 10 for the rotating shaft 6 of the vehicle driving motor 1, the slide bearing device including the metal substrate 10A, the housing 2, and the lubricant inlet portion 7 is described. Among them, the metal substrate 10A is a member having a main function of the slide bearing.

First, components other than the slide bearing device 10 constituting the vehicle driving motor 1 are described with reference to Fig. 1.

The stator 4 and the rotor 5 generate power of the vehicle driving motor 1 by magnetic force.

The stator 4 is attached inside the housing 2, includes a coil 4A that generates electromagnetic force by being supplied with a current, and is disposed so as to surround the rotor 5 in a circumferential direction. The coil 4A is connected to a power supply by an unillustrated wiring line. Further, the stator 4 is disposed separately from the rotating shaft 6 as compared with the rotor 5 inside the housing 2.

The rotor 5 has a function of generating a magnetic field. The rotating shaft 6 is attached to a shaft center of the rotor 5. The rotating shaft 6 and the rotor 5 integrally rotate with rotation of the rotor 5, which makes it possible to take out the rotation power as the vehicle driving motor 1.

As described above, the rotating shaft 6 transmits the rotation power generated by the vehicle driving motor 1 to the outside. The rotating shaft 6 is configured to have a long and round rod shape extending in the axial direction X illustrated in Fig. 1, and rotates around the center axis S. Further, the other end 64 side of the rotating shaft 6 is exposed so as to protrude to the outside of the housing 2.

The rotating shaft 6 may be connected to an unillustrated decelerator for increasing rotational torque as necessary.

In the vehicle driving motor 1, as described above, the stator 4 is disposed outside the rotating shaft 6, and the rotor 5 connected to the rotating shaft 6 is disposed inside the stator 4 in the housing 2. In such a configuration, when the coil 4A of the stator 4 is energized from the unillustrated power supply, the coil 4A generates a magnetic field, the rotor 5 rotates by interaction of the magnetic field generated by the coil 4A and the magnetic field generated by the rotor 5, and accordingly, the rotating shaft 6 rotates. Further, by outputting the rotation power by the rotating shaft 6 to the outside, the rotation power can be used as power for driving the vehicle and the like as described above.

Next, a configuration of the slide bearing device 10 is described in detail with reference to the above-described drawings.

The housing 2 constitutes the slide bearing device 10 according to the present embodiment by being attached with the metal substrate 10A, and houses other members constituting the vehicle driving motor 1 in an internal space 2A, thereby functioning as a housing for the vehicle driving motor 1.

The housing 2 includes one or more bearing holding holes 3 each holding the metal substrate 10A, and can internally house the stator 4, the rotor 5 and at least a part of the rotating shaft 6 provided in the vehicle driving motor 1. The housing 2 in the illustrated example includes the bearing holding holes 3 at two positions, and each of the bearing holding holes 3 holds the metal substrate 10A. As a result, a vicinity of the one end 65 of the rotating shaft 6 is supported by the metal substrate 10A held in one of the bearing holding holes 3, and a vicinity of the other end 64 of the rotating shaft 6 is supported by the metal substrate 10A held in the other bearing holding hole 3.

Each bearing holding hole 3 may penetrate through the housing 2 in a thickness direction. Alternatively, the bearing holding hole 3 may be a recessed hole opening in the housing 2, for example, a round hole having a substantially cylindrical inner surface for holding the metal substrate 10A. In the example illustrated in Fig. 1, the bearing holding hole 3 disposed on the other end 64 side of the rotating shaft 6 penetrates through the housing 2 so as to expose the other end 64 to the outside of the housing 2, whereas the bearing holding hole 3 disposed on the one end 65 side of the rotating shaft 6 is formed in a recessed shape to house the one end 65 without penetrating through the housing 2. An internal shape, surface finish, an inner diameter, and the like of the bearing holding hole 3 are optimized so as to realize an appropriate fastening allowance (in other words, press-in allowance) of the metal substrate 10A, and accordingly, the metal substrate 10A is appropriately and firmly held.

For example, in a case where the bearing holding hole 3 on the one end 65 side of the rotating shaft 6 and the bearing holding hole 3 on the other end 64 side are both provided to penetrate through the housing 2, a vehicle driving motor having a so-called double-shaft structure in which both ends of the rotating shaft 6 are exposed to the outside can be configured.

In the present embodiment, as the bearing holding hole 3, a configuration in which an internal surface is integrally formed without being divided into a plurality of surfaces is adopted; however, the configuration is not limited thereto, and for example, the housing 2 may be configured by a plurality of members such that the inner surface of the bearing holding hole 3 is divided into a plurality of surfaces.

In the slide bearing device 10 according to the present embodiment, the metal substrate 10A is a member rotatably supporting the rotating shaft 6 of the vehicle driving motor 1, and is configured to have a cylindrical shape including the inner peripheral surface 10b, the outer peripheral surface 10a, and two axial end surfaces 10c.

As illustrated in Fig. 1 and Fig. 2A, the metal substrate 10A includes the opening path 11 disposed in a direction along a gravity acting direction G at one position along a circumferential direction of the metal substrate 10A.

In the slide bearing device 10 according to the present embodiment, the above-described housing 2 includes one or more communication paths 21. Each of the communication paths 21 includes one opening 21a communicating with the opening path 11 of the corresponding metal substrate 10A on the outer peripheral surface 10a side, and the other opening 21b opening to the outside or the inside of the housing 2. In the example illustrated in Fig. 1, the communication paths 21 are provided at two positions in total corresponding to the respective metal substrates 10A held at two positions, and are configured such that the other openings 21b communicate with the internal space (inside) 2A of the housing 2.

Further, a lubricant supply path 30 is secured between the inner peripheral surface 10b of the metal substrate 10A and an outer peripheral surface 6a of the rotating shaft 6. The lubricant supply path 30 is a bearing clearance for supplying lubricant L that is introduced to the inside of the housing 2 by the lubricant inlet portion 7, toward the inner peripheral surface 10b serving as the sliding surface.

As illustrated in Fig. 3A, when the metal substrate 10A is disposed such that the center axis S intersects a plane perpendicular to the gravity acting direction G at an angle of 10 degrees or less, an axis of the opening path 11 is disposed within a range of an angle around the center axis S of 90 degrees from a gravity line P along the gravity acting direction G. In addition, the opening path 11 is disposed near a center part in a direction of a width W along the axial direction X of the metal substrate 10A (also see Fig. 2B).

Each communication path 21 provided in the housing 2 is provided such that the entire path from the one opening 21a toward the other opening 21b is not directed to a direction opposite to the gravity acting direction G.

As illustrated in Fig. 4, in the slide bearing device 10 according to the present embodiment, the minimum diameter B of a cross-section perpendicular to the axial direction of the opening path 11 of the metal substrate 10A and the minimum diameter R of a cross-section perpendicular to the axial direction of the communication path 21 of the housing 2 satisfy relationship represented by the following expression (1). $B \leq 2 R$

The lubricant inlet portion 7 introduces the lubricant L to the inside of the housing 2 from the outside.

The lubricant inlet portion 7 in the example illustrated in Fig. 1 includes a lubricant tank 71 storing the lubricant L, a pipe 72 through which the lubricant L led out from the lubricant tank 71 flows, and an oil jet nozzle (oil jetting means) 73 introducing the lubricant L supplied from the pipe 72 to the internal space 2A of the housing 2. In the illustrated example, the oil jet nozzle 73 is disposed in the internal space 2A of the housing 2.

The lubricant L stored in the lubricant tank 71 is fed to the oil jet nozzle 73 through the pipe 72 by, for example, an unillustrated pump. Then, the oil jet nozzle 73 sprays the lubricant L toward the rotating shaft 6 of the vehicle driving motor 1.

The slide bearing device 10 according to the present embodiment can achieve action and effects described below, in particular, because the opening path 11 of the metal substrate 10A and the communication path 21 of the housing 2 are provided in the directions, in the arrangement, and in the sizes described above.

Since the axis of the opening path 11 in the metal substrate 10A is disposed at the angle within the above-described range from the gravity line P along the gravity acting direction G, the lubricant L flowing from the one opening 11a of the opening path 11 can flow toward the other opening 11b only by action of oil film pressure generated on the sliding surface, furthermore for example, even only by action of the gravity. With expression of the action, discharge efficiency of the lubricant L from the other opening 11b is further improved, and the lubricant L can be efficiently introduced to the one opening 21a of the corresponding communication path 21 of the housing 2.

Further, in the communication path 21 of the housing 2, the other opening 21b is disposed below the one opening 21a in the gravity acting direction (vertical downward direction) G. Therefore, the lubricant L flowing from the opening path 11 of the metal substrate 10A can be discharged even only by action of the gravity. This improves the discharge efficiency of the lubricant L, and thus improves lubricant replacement efficiency L.

When the minimum diameter B of the opening path 11 and the minimum diameter R of the communication path 21 satisfy the relationship represented by the above-described expression (1), the lubricant L efficiently flows only by action of the oil film pressure, furthermore, even only by action of the gravity without stagnating at a communication position therebetween. As a result, the lubricant can be efficiently discharged from the other opening 21b of the communication path 21.

In the present embodiment, the lubricant L is supplied to the inner peripheral surface 10b of the metal substrate 10A from an inlet of the lubricant supply path 30, namely, the bearing clearance between the metal substrate 10A and the rotating shaft 6, whereas the lubricant L is discharged from the inner peripheral surface 10b through the opening path 11. Thus, the lubricant L is supplied and discharged from different positions. As a result, for example, unlike an existing case where a portion where the lubricant is to be supplied and a portion where the lubricant is to be discharged in the bearing clearance overlap with each other, it is possible to avoid collision of the supplied lubricant L and the discharged lubricant L. Therefore, the lubricant L is efficiently discharged from the inner peripheral surface 10b of the metal substrate 10A, and a sufficient amount of lubricant L can be supplied through the lubricant supply path 30 to make the flow of the lubricant L smooth. This enhances lubricant replacement efficiency L.

From a viewpoint of causing the lubricant L to surely flow out from the opening path 11 of the metal substrate 10A and the communication path 21 of the housing 2 in the gravity acting direction, the minimum diameter B and the minimum diameter R described above more preferably satisfy relationship represented by the following expression (2). This further improves discharge efficiency and lubricant replacement efficiency L in the slide bearing device 10. $B \leq R$

Further, as described above, from the viewpoint of causing the lubricant L to surely flow out from the opening path 11 of the metal substrate 10A in the gravity acting direction, the axis of the opening path 11 is more preferably disposed within a range of the angle around the center axis S of 60 degrees from the gravity line P along the gravity acting direction as illustrated in Fig. 3B. Further, from the above-described viewpoint, the axis of the opening path 11 is further preferably disposed within a range of the angle around the center axis S of 45 degrees from the gravity line P along the gravity acting direction.

Although not particularly limited, the minimum diameter B of the opening path 11 of the metal substrate 10A is preferably a size (diameter) of 1/3 or less of the width W that is obtained by removing chamfered portions from the entire width along the axial direction X of the metal substrate 10A as in the example illustrated in Fig. 2B. In the example illustrated in Fig. 2B, although details are described below, chamfering is performed on a position where the outer peripheral surface 10a and each of the axial end surfaces 10c are adjacent to each other. By forming the opening path 11 to have the above-described size, sufficient load capacity as the bearing can be secured.

Further, although not particularly limited, for example, the diameter of the inner peripheral surface 10b can be set to 10 mm to 50 mm and the width W of the metal substrate 10A in the direction along the axial direction X can be set to 2 mm to 50 mm in consideration of application as the vehicle driving motor 1, an outer diameter of the rotating shaft 6, and the like.

Note that in a case where the metal substrate 10A has a configuration in which chamfering is not performed on the position where the outer peripheral surface 10a and each of the axial end surfaces 10c are adjacent to each other, the entire width of the metal substrate 10A is equal to the above-described width W.

Although not particularly limited, the minimum diameter R of the communication path 21 of the housing 2 is preferably 1 mm or more, and more preferably 2 mm or more in terms of discharge efficiency of the lubricant L.

In a case where, in processing of the metal substrate 10A and the housing 2, for example, a cross-sectional shape of each of the opening path and the communication path is a shape different from a true circle, such as an ellipse due to influence of processing accuracy and the like, average diameters of the cross-sectional shapes of the respective paths are calculated, and design is performed such that the average diameters are used as the minimum diameters B and R and are included in the above-described range.

Although not particularly limited, a thickness of the metal substrate 10A can be determined in consideration of a difference between a diameter of the inner peripheral surface 10b and the outer diameter (diameter of outer peripheral surface 10a), and characteristics such as strength. The thickness of the metal substrate 10A is preferably 0.8 mm or more in terms of the strength and the like. On the other hand, the thickness of the metal substrate 10A is preferably 3 mm or less because an excessively large thickness of the metal substrate 10A may cause an excessively large outer diameter. Further, the thickness of the metal substrate 10A may be fixed in the entire circumferential direction.

In a case where the metal substrate has a structure including a plurality of layers described below, a total thickness of all layers is made equal to the thickness within the above-described range.

As with the example illustrated in Fig. 3C, in a case where a plurality of opening paths are provided in the metal substrate 10A and a plurality of corresponding communication paths are also provided in the housing 2, it is sufficient that at least one communication path (and opening path) satisfy the direction and the arrangement position with respect to the gravity acting direction G and the gravity line P as described above. In the example illustrated in Fig. 3C, the opening paths 11 are provided at two positions of the metal substrate 10A, and corresponding communication paths 21 and 24 are provided at two positions. In the illustrated example, the communication path 24 from one opening 24a toward the other opening 24b is disposed in a direction opposite to the gravity acting direction G. In contrast, the communication path 21 is disposed in a direction along the gravity acting direction G and the gravity line P. In the illustrated example, out of the communication paths 21 and 24 at the two positions, the communication path 21 is disposed in a direction in which the lubricant L flows down even only by action of the gravity. Thus, sufficient discharge efficiency of the lubricant L can be secured.

Further, in the case of the configuration in which the plurality of opening paths are provided in the metal substrate 10A and the plurality of communication paths are provided in the housing 2 as with the example illustrated in Fig. 3C, when at least one opening path and a communication path communicating with the opening path respectively have the minimum diameters B and R as described above, discharge efficiency of the lubricant L can be secured. In other words, in the case of the illustrated example, when the sizes of the minimum diameters B and R as described above are applied to the communication path 21 disposed in the direction along the gravity acting direction G and the gravity line P, sufficient discharge efficiency of the lubricant L can be achieved.

The material of the metal substrate 10A is not particularly limited, and can be selected in consideration of various kinds of characteristics such as slidability and mechanical strength.

In Fig. 1 to Fig. 5, an example in which the metal substrate has a single layer structure made of a single metal material is described; however, the metal substrate is not limited thereto. The metal substrate can adopt, for example, a solid structure as illustrated in a partial cross-sectional view of Fig. 7A, or a bimetal structure or a trimetal structure in which a plurality of materials are stacked as illustrated in partial cross-sectional views of Figs. 7A and 7C.

In Figs. 7A to 7C, because of illustration, the layer structure of the metal substrate is illustrated as a partial cross-sectional view; however, the actual metal substrate 10A has a cylindrical shape as illustrated in Fig. 1, Fig. 2, and other drawings. Therefore, in the following description, terms such as an "inner peripheral surface", an "outer peripheral surface", and a "circumferential direction" may be used for description of each layer.

Fig. 7A illustrates an example of the solid structure including a bearing alloy layer 13a made of, for example, a single metal material or an alloy material, which is a single layer.

In a case where the metal substrate is used as a single layer with only the bearing alloy layer 13a, a material having sufficient strength characteristics in addition to functions to be exerted as the bearing that rotatably supports the rotating shaft 6, such as pressure resistance, abrasion resistance, heat resistance, high heat conductivity, and low friction can be used. Examples of such a material include an aluminum alloy and a copper alloy.

In the case where the metal substrate is used as a single layer with only the bearing alloy layer 13a, a thickness of the bearing alloy layer 13a is not particularly limited, and can be designed in consideration of strength as the bearing. For example, the thickness of the bearing alloy layer 13a may be within a range from 0.8 mm or more and 3 mm or less as with the above-described total thickness of the metal substrate 10A.

The thickness of the bearing alloy layer 13a may be fixed in the entire circumferential direction as with the illustrated example.

Fig. 7B illustrates an example of the bimetal structure in which the bearing alloy layer 13a illustrated in Fig. 7A is stacked on a back metal layer 13b. In other words, the back metal layer 13b is disposed on the outer peripheral surface side of the metal substrate, and the bearing alloy layer 13a is disposed on the inner peripheral surface side (sliding surface side).

A material that is particularly excellent in strength characteristics and is hardly deformed is preferably used for the back metal layer 13b. Examples of such a material include hypoeutectoid steel containing carbon in amount of 0.05% or more by mass and 0.5% or less by mass, and stainless steel.

In a case where the bimetal structure illustrated in Fig. 7B is adopted, the back metal layer 13b serves as a base body supporting the bearing alloy layer 13a. When the high-strength material is used for the back metal layer 13b, even in a case where the bearing alloy layer 13a is stacked, strength can be secured while the total thickness is reduced.

In this case, a thickness of the back metal layer 13b may be, for example, within a range from 0.5 mm or more and 2.8 mm or less.

Further, the thickness of the back metal layer 13b may be fixed in the entire circumferential direction as with the illustrated example.

Although not particularly limited, the thickness of the bearing alloy layer 13a in the case where the above-described bimetal structure is adopted may be, for example, within a range from 0.1 mm or more and 0.5 mm or less, and may be fixed in the entire circumferential direction as with the illustrated example.

Although not particularly limited, a total thickness of the bearing alloy layer 13a and the back metal layer 13b in the case where the bimetal structure is adopted may be, for example, within a range from 0.8 mm or more and 3 mm or less as with the thickness in the case where the bearing alloy layer 13a is used in the solid structure, and may be fixed in the entire circumferential direction as with the above description.

Fig. 7C illustrates an example of the trimetal structure in which an overlay layer 13c is further stacked on the bearing alloy layer 13a in addition to the layer structure illustrated in Fig. 7B. The overlay layer 13c is disposed on the inner peripheral surface side of the metal substrate so as to serve as the sliding surface of the slide bearing device.

Although not particularly limited, examples of a material of the overlay layer 13c include metal plating and a resin.

Although not particularly limited, a thickness of the overlay layer 13c may be, for example, within a range from 1 µm or more and 30 µm or less. The thickness of the overlay layer 13c may be fixed in the entire circumferential direction as with the illustrated example.

Although not particularly limited, the thicknesses of the bearing alloy layer 13a and the back metal layer 13b in the case where the above-described trimetal structure is adopted may be, for example, the thicknesses same as the above-described range, and may be fixed in the entire circumferential direction as with the illustrated example.

Although not particularly limited, a total thickness of the bearing alloy layer 13a, the back metal layer 13b, and the overlay layer 13c in the case where the trimetal structure is adopted may be, for example, within a range from 0.8 mm or more and 3 mm or less as in the cases of the above-described solid structure and the bimetal structure, and may be fixed in the entire circumferential diction as with the above description.

Among the above-described layer structures, in particular, in a case where the bimetal structure illustrated in Fig. 7B or the trimetal structure illustrated in Fig. 7C is adopted, friction torque with the rotating shaft on the inner peripheral surface side can be remarkably reduced.

The material of the housing 2 is not particularly limited, and for example, a metal material generally used for the housing of the vehicle driving motor can be appropriately adopted.

In the slide bearing device 10 according to the present embodiment, as long as a portion where the minimum diameter R of the communication path 21 of the housing 2 is extremely narrow is absent in the path from one opening 21a to the other opening 21b, the lubricant L can be discharged with small internal resistance. This makes it possible to secure excellent lubricant replacement efficiency L.

The communication path provided in the housing is not limited to the communication path having a complete linear shape, and may be bent at one or more positions in the length direction or may have a curbed shape. For example, as with a communication path 25 illustrated in Fig. 3D, a path that extends from one opening 25a to the other opening 25b and the path is configured to be bent at a position of a bent part 25c as it heads towards may be adopted. The communication path 25 in the illustrated example includes a linear upstream path 25A that is disposed on the one opening 25a side of the bent part 25c as a boundary, and a linear downstream path 25B that is disposed on the other opening 25b side of the bent part 25c.

Since such a communication path 25 is a path entirely inclined in the gravity acting direction G toward the other opening 25b, the lubricant L flows down even only by action of the gravity without stagnating at the position of the opening 25a and inside the path. Thus, discharge efficiency of the lubricant L is sufficiently secured.

Irrespective of the shape of the communication path in the length direction, the configuration is made such that the minimum diameter B of the opening path 11 in the metal substrate 10A and the minimum diameter R of the communication path in the housing 2 satisfy the relationship represented by the above-described expression (1) or (2), which makes it possible to discharge the lubricant L toward the other opening of the communication path without increasing pressure.

In the slide bearing device 10 according to the present embodiment, the one opening 11a of the opening path 11 in the metal substrate 10A is preferably disposed at a position where the oil film pressure occurs with rotation of the rotating shaft 6 on the inner peripheral surface 10b.

More specifically, for example, in a case where the position where the oil film pressure occurs on the inner peripheral surface 10b of the metal substrate 10A is located at a position throughout the inner peripheral surface 10b in the circumferential direction, and is a position near the center part in the width direction along the axial direction X, the one opening 11a of the opening path 11 is more preferably disposed at that position.

The position where the oil film pressure occurs in the slide bearing device 10 is generally close to a center in the width direction (lateral width direction on paper surface in Fig. 1) on the inner peripheral surface 10b of the metal substrate 10A, and is an entire region of a land portion (sliding portion) of the inner peripheral surface 10b in the circumferential direction. In other words, when the one opening 11a of the opening path 11 is disposed at the position in the slide bearing device 10 illustrated in Fig. 1, the used lubricant L can be efficiently discharged by action of the oil film pressure. Along therewith, fresh lubricant L further easily enters the lubricant supply path 30. Thus, lubricant replacement efficiency L is further improved.

The example described in the present embodiment adopts the configuration in which the metal substrate 10A having the above-described configuration is disposed on each of the one end 65 side and the other end 64 side of the rotating shaft 6 in the vehicle driving motor 1, and the lubricant L is discharged from both end sides by the two metal substrates 10A; however, the configuration is not limited thereto. For example, the metal substrate 10A having the configuration described in the present embodiment may be disposed in any one of the bearing holding holes 3 at the two positions in the housing 2. Even in a case where such a configuration is adopted, the discharge efficiency and lubricant replacement efficiency L described above can be sufficiently improved.

Further, for example, it is possible to adopt a configuration including the slide bearing devices 10 at three or more positions that is obtained by providing the bearing holding holes 3 at three or more positions along the axial direction X of the rotating shaft 6 in the housing 2, and providing the metal substrate 10A on each of the bearing holding holes 3.

The lubricant L used in the slide bearing device 10 according to the present embodiment and in the vehicle driving motor 1 on which the slide bearing device 10 is mounted is not particularly limited. Examples of such lubricant L include continuously variable transmission fluid (CVTF), gear oil, electric vehicle fluid (EVF), and refrigerant.

The opening path 11 and the communication path 21 in the slide bearing device 10 according to the present embodiment discharge the lubricant L from the inner peripheral surface 10b of the metal substrate 10A, and do not allow gas such as air to flow therethrough.

On the other hand, for example, in a case where the opening path and the communication path are configured to allow the air to actively flow therethrough from the outside for an object different from the object of the present invention, the opening path and the communication path may be blocked by the air due to flow of the air, and the discharge path of the lubricant from the inner peripheral surface of the metal substrate may not be secured. In such a case, discharge efficiency of the lubricant from the sliding surface is lowered, and lubricant replacement efficiency is deteriorated. As a result, it may become difficult to supply the lubricant from the lubricant supply path that is the bearing clearance to the inner peripheral surface.

As described above, the slide bearing device 10 according to the present embodiment adopts the configuration in which discharge of the lubricant L from the inner peripheral surface 10b and supply of the lubricant L from the bearing clearance to the inner peripheral surface 10b side are performed through different paths, and each of the paths allows only the lubricant L to flow therethrough. Therefore, discharge efficiency and lubricant replacement efficiency L are enhanced, and accordingly, the air does not flow or hardly flow through the communication path 21 and the opening path 11 from the outside of the bearing. Further, even if a small amount of air unintentionally and inevitably flows from the outside of the bearing to the communication path 21 and the opening path 11, the above-described configuration can minimize inflow of the air, and can maintain excellent discharge efficiency and lubricant replacement efficiency L.

In the vehicle driving motor 1 including the slide bearing device 10 according to the present embodiment, a circulation path of the lubricant L can be secured by, for example, action described below.

For example, although detailed illustration is omitted, the other opening 21b of at least a part of the plurality of communication paths 21 provided in the housing 2 is caused to open toward the outside of the housing 2. In a case of such a configuration, at least a part of the used or redundant lubricant L supplied to the inner peripheral surface 10b of the metal substrate 10A is discharged to the outside of the housing 2 through the opening path 11 and the communication path 21. The lubricant L discharged to the outside of the housing 2 is structured to be recirculated to the lubricant tank 71 of the lubricant inlet portion 7 by the unillustrated pump and circulation pipe, and is reintroduced to the inside of the housing 2 through the pipe 72 and the like and resupplied to the rotor 5 and the rotating shaft 6 provided in the vehicle driving motor 1. At this time, the resupplied lubricant L propagates on the outer peripheral surface 6a of the rotating shaft 6, and is resupplied to the inner peripheral surface 10b of the metal substrate 10A through the lubricant supply path 30.

Alternatively, in the present embodiment, for example, it is possible to adopt a circulation path in which the lubricant L discharged to the outside of the housing 2 is first structured to be recirculated to the lubricant tank 71 by the unillustrated circulation pipe, and the lubricant L sucked up from the lubricant tank 71 by the unillustrated pump is reintroduced to the inside of the housing 2 through the pipe 72 and the like.

As described above, the flow in which at least a part of the lubricant L discharged to the outside of the housing 2 is circulated, and is resupplied to the inner peripheral surface 10b of the metal substrate 10A serving as the sliding surface is repeated, which makes it possible to efficiently use the lubricant L without waste. Further, it is possible to reduce a use amount of lubricant L in the slide bearing device 10, furthermore, in the entire vehicle driving motor 1.

As described below, the vehicle driving motor including the slide bearing device illustrated in Fig. 1 and Fig. 8 can adopt a configuration in which the lubricant L that is discharged to the internal space 2A of the housing 2 through the opening path 11 and the communication path 21, or is supplied to the rotating shaft 6 or the rotor 5 and then flows down to and is stored in the internal space 2A of the housing 2 is resupplied toward the inner peripheral surface 10b of the metal substrate 10A.

In the following, the flow in which the lubricant L stored in the internal space 2A is circulated and resupplied toward the inner peripheral surface 10b of the metal substrate 10A is described in detail.

In the example illustrated in Fig. 1, the other opening 21b of the communication path 21 in the housing 2 opens to the internal space 2A of the housing 2. The lubricant L that is supplied to the inner peripheral surface 10b of the metal substrate 10A and used to cool the sliding surface is discharged to the internal space 2A of the housing 2 through the opening path 11 and the communication path 21, and is stored in the internal space 2A of the housing 2. Further, a redundant part of the lubricant L supplied from the lubricant inlet portion 7 toward the rotating shaft 6 or the rotor 5 of the vehicle driving motor 1 falls into the housing 2 and is stored in the internal space 2A.

Further, a part of the lubricant L stored in the internal space 2A of the housing 2 is splashed with rotation of the rotor 5 and the rotating shaft 6 provided in the vehicle driving motor 1. The lubricant L thus splashed is resupplied toward the inner peripheral surface 10b of the metal substrate 10A through the lubricant supply path 30. In the above-described manner, the circulation path of the lubricant L is formed.

As described above, a part of the lubricant L stored in the internal space 2A of the housing 2 is circulated and resupplied to the inner peripheral surface 10b of the metal substrate 10A serving as the sliding surface, which makes it possible to efficiently use the lubricant L without waste. Further, it is possible to reduce a use amount of lubricant L in the slide bearing device 10, furthermore, in the entire vehicle driving motor 1.

The vehicle driving motor 1 described in the present embodiment is generally often installed in a decelerator chamber housing an unillustrated decelerator gear that increases rotational torque while reducing the rotation speed of the rotating shaft 6 of the vehicle driving motor 1 in the electric vehicle and the like. In such a case, a configuration can be made such that, after the lubricant L discharged to the outside from the housing 2 through the communication path 21 is recovered in the decelerator chamber, the lubricant L is structured to be recirculated to the lubricant tank 71 by the unillustrated pump, pipe, and the like.

The lubricant inlet portion provided in the slide bearing device 10 according to the present embodiment is not limited to the configuration including the oil jet nozzle 73 as illustrated in Fig. 1. The lubricant inlet portion may have any configuration as long as the lubricant inlet portion can supply the lubricant L to the rotating shaft 6 provided inside the housing 2 by spraying, dripping, or continuously pouring the lubricant L.

As another example of the lubricant inlet portion, it is possible to use a lubricant inlet portion having a configuration that at least includes an unillustrated gutter-shaped member disposed inside the housing 2 and to which the lubricant L is introduced from the outside.

As such a gutter-shaped member, although detailed illustration is omitted, for example, it is possible to adopt a gutter-shaped member that is disposed at a position opposite to the gravity acting direction G as viewed from the rotating shaft 6 of the vehicle driving motor 1 with respect to the rotating shaft 6, and includes one or more outflow ports disposed at positions for supplying the lubricant L toward the rotating shaft 6 and the rotor 5 by dripping or continuously pouring the lubricant L.

The lubricant inlet portion including the above-described gutter-shaped member can efficiently drip or pour the lubricant L supplied from the lubricant tank 71 illustrated in Fig. 1 and other drawings through the pipe 72 toward the rotating shaft 6 and the rotor 5.

As still another example of the lubricant inlet portion, it is possible to use a lubricant inlet portion having a configuration that at least includes an unillustrated lubricant supply pipe that is disposed inside the housing 2 and to which the lubricant L is introduced from the outside.

As such a lubricant supply pipe, although detailed illustration is omitted, as with the above description, it is possible to adopt a lubricant supply pipe disposed at a position opposite to the gravity acting direction as viewed from the rotating shaft 6 of the vehicle driving motor 1 with respect to the rotating shaft 6. Further, as the lubricant supply pipe, for example, it is possible to adopt a lubricant supply pipe having including one or more outflow ports disposed at the positions for supplying the lubricant L toward the rotating shaft 6 and the rotor 5 by dripping or continuously pouring the lubricant L.

The lubricant inlet portion including the above-described lubricant supply pipe can efficiently drip or pour the lubricant L supplied from the lubricant tank 71 illustrated in Fig. 1 and other drawings through the pipe 72 toward the rotating shaft 6 and the rotor 5, as with the case of the lubricant inlet portion including the above-described gutter-shaped member.

Further, in the present embodiment, for example, it is possible to adopt a configuration in which the rotating shaft 6 of the vehicle driving motor is used as supply means of the lubricant L.

More specifically, it is possible to adopt a configuration in which the rotating shaft 6 has a hollow shape, and an internal space secured by an inner peripheral surface 6b serves as an axial center flow path 6A through which the lubricant can flow, as with a vehicle driving motor 1A in an example illustrated in Fig. 8.

The rotating shaft 6 illustrated in Fig. 8 includes, at the other end 64 side protruding from the housing 2, an inlet port 61 for introducing the lubricant L to the axial center flow path 6A from the lubricant tank 71 constituting the lubricant inlet portion 7 through the pipe 72.

Further, the rotating shaft 6 in the illustrated example includes outflow ports 63 that open from the axial center flow path 6A toward the outer peripheral surface 6a of the rotating shaft 6, and causes the lubricant L introduced to the axial center flow path 6A to flow out by centrifugal force with rotation of the rotating shaft 6 to pour and supply the lubricant L to the outer peripheral surface 6a of the rotating shaft 6.

Since the vehicle driving motor 1A and the slide bearing device 10 illustrated in Fig. 8 include the above-described configuration, it is possible to efficiently and uniformly pour the lubricant L over the outer peripheral surface 6a of the rotating shaft 6.

A method of assembling the metal substrate 10A to each bearing holding hole 3 of the housing 2 is described below.

First, the metal substrate 10A having a cylindrical shape is press-fitted into the bearing holding hole 3 of the housing 2. At this time, a length of an outer periphery of the metal substrate 10A before press-fitting is slightly greater than a length of an inner periphery of the bearing holding hole 3. Therefore, after the metal substrate 10A is press-fitted into the inside of the bearing holding hole 3, the outer periphery of the metal substrate 10A and the inner periphery of the bearing holding hole 3 press each other. By the mutual pressing force, the metal substrate 10A is assembled to the inside of the bearing holding hole 3 by fitting fixation.

Thereafter, the rotating shaft 6 of the vehicle driving motor 1 is inserted into the inner peripheral surface 10b side of the metal substrate 10A having the cylindrical shape, disposed in the bearing holding hole 3 of the housing 2. The metal substrate 10A rotatably supports the rotating shaft 6 at an appropriate position from the inner peripheral surface 10b side.

A method of processing the inner peripheral surface 10b serving as the sliding surface of the metal substrate 10A is not particularly limited. For example, it is possible to adopt a method of processing a plate material into a cylindrical shape or a halved-cylinder shape, and performing broaching, boring, or the like on an inner diameter side to form the sliding surface. Further, for example, it is possible to adopt a method of processing a rod-shaped material or a pipe-shaped material by cutting or the like, to form the desired shape and the sliding surface.

A timing when the opening path 11 is formed in the metal substrate 10A is not particularly limited. For example, the opening path 11 may be formed at a timing when the metal substrate 10A is processed, namely, at a timing before the metal substrate 10A is inserted into the bearing holding hole 3 of the housing 2, or may be formed at a timing when the housing 2 and the metal substrate 10A are processed together after the metal substrate 10A is press-fitted into the bearing holding hole 3.

### <Action and Effects>

As described above, the slide bearing device 10 for the rotating shaft of the vehicle driving motor according to the present embodiment adopts the configuration in which the metal substrate 10A includes the opening path 11 communicating between the inner peripheral surface 10b and the outer peripheral surface 10a, the housing 2 includes the communication path 21 having the one opening 21a communicating with the opening path 11 of the metal substrate 10A on the outer peripheral surface 10a side and the other opening 21b opening to the outside or the inside of the housing 2, and the opening path 11 of the metal substrate 10A and the communication path 21 of the housing 2 are provided in directions, positions, and sizes optimized to the gravity acting direction G.

With the above-described configuration, the lubricant L used to lubricate the inner peripheral surface 10b of the metal substrate 10A serving as the sliding surface is sequentially discharged from the metal substrate 10A through the opening path 11 and the communication path 21. Therefore, the lubricant L newly supplied can be efficiently introduced into the lubricant supply path 30 that is the bearing clearance between the inner peripheral surface 10b of the metal substrate 10A and the outer peripheral surface 6a of the rotating shaft 6.

Therefore, it is possible to supply a sufficient amount of lubricant L to the sliding surface without performing forcible oil supply, and to suppress generation of vibration and noise while sufficiently cooling the metal substrate 10A constituting the slide bearing and the rotating shaft 6.

### <Modifications of Present Invention>

Although details of the embodiment of the present invention are described in detail above, the slide bearing device for the rotating shaft of the vehicle driving motor according to the present invention is not limited by the above-described embodiment, and can be implemented by being variously modified and corrected without departing from the principle of the present invention and the scope of the claims.

For example, in Fig. 2A and other drawings, a bush member having a substantially cylindrical shape in which the inner peripheral surface 10b of the metal substrate 10A is continuously connected in the circumferential direction is illustrated; however, the metal substrate is not limited to such a shape. As with examples illustrated in Figs. 5A and 5B and Figs. 6A and 6B, a metal substrate having another shape may be adopted.

Figs. 5A and 5B are cross-sectional views respectively illustrating outlines of metal substrates 10B and 10C according to modifications of the present invention.

Figs. 6A and 6B are cross-sectional views respectively illustrating outlines of metal substrates 10D and 10E according to modifications of the present invention.

In each of Figs. 5A and 5B and Figs. 6A and 6B, illustration of an opening path is omitted for convenience of illustration.

In the present invention, for example, as with the metal substrate 10B illustrated in Fig. 5A, a metal substrate having a winding bush structure divided at a position of a divided part 12 may be adopted, or as with the metal substrate 10C illustrated in Fig. 5B, a metal substrate having a half-divided structure divided at divided parts 14 at two positions may be adopted. In each of the metal substrates 10B and 10C respectively illustrated in Figs. 5A and 5B, partial metal substrates are combined so as to face each other at the divided part 12 or the divided parts 14 to form a substantially cylindrical shape. The metal substrate 10C in the example illustrated in Fig. 5B includes the two partial metal substrates because the above-described divided structure is adopted.

Further, the present invention is not limited to the configuration in which the inner peripheral surface side is formed by one arc as with the example illustrated in Fig. 2A and other drawings. For example, as with a metal substrate 10D illustrated in Fig. 6A, a configuration in which the inner peripheral surface 10b side is formed by two semicircular arcs may be adopted, or as with the metal substrate 10E illustrated in Fig. 6B, a configuration in which the inner peripheral surface 10b is formed by three arcs having equal sizes may be adopted. In the illustrated examples, the inner peripheral surface 10b in each of the metal substrates 10D and 10E is formed by a plurality of arcs in a cross-section in a direction orthogonal to the axial direction X.

When the structure including two arcs as illustrated in Fig. 6A or the structure including three arcs as illustrated in Fig. 6B is adopted for the metal substrate, in a case where the lubricant supply path 30 is the same bearing clearance (inscribed circle of inner peripheral surface 10b of metal substrate 10A to outer diameter of rotating shaft 6), a flow path cross-sectional area of the lubricant supply path 30 is increased. This makes it possible to increase a supply amount of lubricant L supplied from the lubricant supply path 30 to the inner peripheral surface 10b.

Further, in the present invention, in a case where the structure in which the inner peripheral surface side of the metal substrate is formed by two arcs or three arcs is adopted as described above, the structure is not limited to the structure in which arcs are equally arranged along the inner peripheral surface as illustrated in Fig. 6A or 6B. For example, although detailed illustration is omitted, a structure in which two arcs or three arcs are irregularly arranged along the inner peripheral surface may be adopted, or a structure in which at least a part of the inner peripheral surface is recessed in an arc shape may be adopted.

Further, in the case where the above-described structure in which the inner peripheral surface is formed by the plurality of arcs is adopted for the metal substrate, a structure in which the metal substrate is divided into a plurality of parts in the circumferential direction may be further adopted. Dividing positions and a division number of the metal substrate in the case where such structures are adopted are not particularly limited, and can be appropriately designed and adopted.

In other words, the metal substrate used for the slide bearing according to the present invention can be configured in various kinds of shapes in consideration of characteristics such as slidability and strength.

As described above, even in the case where the structure in which the metal substrate is divided into a plurality of parts in the circumferential direction is adopted, a thickness of each partial metal substrate may be fixed in the entire circumferential direction. The thickness of the partial metal substrate may be 0.8 mm or more and 3 mm or less as in the case where the metal substrate has a continuous structure in the circumferential direction.

On the other hand, the thickness of the partial metal substrate may not be fixed in the circumferential direction. The thickness of the partial metal substrate may be, for example, maximum at a center in the circumferential direction and may be reduced toward end surfaces in the circumferential direction. The thickness of the partial metal substrate indicates a length along a radial direction of the partial metal substrate having a semicylindrical shape.

As with the metal substrate 10A in the example illustrated in Fig. 2B, the position where the outer peripheral surface 10a and each of the axial end surfaces 10c are adjacent to each other may be chamfered as necessary. Further, as with the illustrated example, a position where the inner peripheral surface 10b and each of the axial end surfaces are adjacent to each other may be chamfered as necessary. Furthermore, as with the illustrated example, a position where the inner peripheral surface 10b and the opening path 11 are adjacent to each other may be chamfered as necessary.

Further, in the slide bearing device for the rotating shaft of the vehicle driving motor according to the present invention, in a case where a configuration obtained by combining the above-described configuration and means for forcibly supplying oil to a bearing surface like an existing slide bearing is adopted, discharge efficiency and lubricant replacement efficiency L are further improved.

The slide bearing device for the rotating shaft of the vehicle driving motor according to the present invention can supply a sufficient amount of lubricant to the sliding surface without performing forcible oil supply, and can suppress generation of vibration and noise while sufficiently cooling the sliding surface and the vicinity thereof. Therefore, the slide bearing device according to the present invention is really useful in application in an electric vehicle and the like.

## Claims

1. A slide bearing device (10) for rotatably supporting a rotating shaft (6) of a vehicle driving motor (1), the slide bearing device (10) comprising:
a metal substrate (10A) having a cylindrical shape and including an inner peripheral surface (10b), an outer peripheral surface (10a), and two axial end surfaces (10c);
a housing (2) including one or more bearing holding holes (3) each holding the metal substrate (10A), and capable of internally housing a rotor (5), a stator (4) and at least a part of the rotating shaft (6) provided in the vehicle driving motor (1); and
a lubricant inlet portion (7) to introduce lubricant (L) from an outside to an inside of the housing (2), wherein
the metal substrate (10A) includes one or more opening paths (11) provided to communicate between the inner peripheral surface (10b) and the outer peripheral surface (10a),
the housing (2) includes one or more communication paths (21) each having one opening (21a) communicating with the corresponding opening path (11) of the metal substrate (10A) on the outer peripheral surface side and another opening (21b) that opens to the outside or the inside of the housing (2),
a lubricant supply path (30) to supply the lubricant (L) introduced to the inside of the housing (2) by the lubricant inlet portion (7) toward the inner peripheral surface (10b) serving as a bearing sliding surface is secured between the inner peripheral surface (10b) of the metal substrate (10A) and an outer peripheral surface (6a) of the rotating shaft (6),
when the metal substrate (10A) is disposed to cause a center axis (S) of the metal substrate (10A) to intersect a plane perpendicular to a gravity acting direction (G) at an angle of 10 degrees or less, an axis of each of the opening paths (11) is disposed within a range of an angle around the center axis (S) of 90 degrees from a gravity line (P) along the gravity acting direction (G), and each of the opening paths (11) is disposed near a center part in a width direction along an axis direction (X) of the metal substrate (10A),
each of the communication paths (21) provided in the housing (2) is provided to cause an entire path from the one opening (21a) toward the other opening (21b) not to be directed to a direction opposite to the gravity acting direction (G), and
a minimum diameter B of a cross-section perpendicular to an axis direction of each of the opening paths (11) of the metal substrate (10A) and a minimum diameter R of a cross-section perpendicular to an axis direction of the corresponding communication path (21) of the housing (2) satisfy relationship represented by the following expression (1). $B \leq 2 R$

2. The slide bearing device (10) for rotatably supporting a rotating shaft (6) of a vehicle driving motor (1) according to claim 1, wherein the minimum diameter B of each of the opening paths (11) of the metal substrate (10A)and the minimum diameter R of the corresponding communication path (21) of the housing (2) satisfy relationship represented by the following expression (2). $B \leq R$

3. The slide bearing device (10) according to claim 1 or 2, wherein the axis of each of the opening paths (11) of the metal substrate (10A) is disposed within a range of the angle around the center axis (S) of 60 degrees from the gravity line (P) along the gravity acting direction (G).

4. The slide bearing device (10) according to any one of claims 1 to 3, wherein the axis of each of the opening paths (11) of the metal substrate (10A) is disposed within a range of the angle around the center axis (S) of 45 degrees from the gravity line (P) along the gravity acting direction (G).

5. The slide bearing device (10) according to any one of claims 1 to 4, wherein the lubricant inlet portion (7) supplies the lubricant (L) toward the rotating shaft (6) of the vehicle driving motor (1) disposed inside the housing (2) by spraying, dripping, or continuously pouring the lubricant (L).

6. The slide bearing device (10) according to claim 5, wherein the lubricant inlet portion (7) at least includes oil jetting means (73) disposed inside the housing (2), and the lubricant (L) is supplied by spraying the lubricant (L) to the rotating shaft (6) of the vehicle driving motor (1) by the oil jetting means.

7. The slide bearing device (10) according to claim 5 or 6, wherein
the lubricant inlet portion (7) at least includes a gutter-shaped member disposed inside the housing (2) and to which the lubricant (L) is introduced from the outside, and
the gutter-shaped member is disposed at a position opposite to the gravity acting direction (G) as viewed from the rotating shaft (6) of the vehicle driving motor (1) with respect to the rotating shaft (6), and includes one or more outflow ports disposed at positions for supplying the lubricant (L) toward the rotating shaft (6) and the rotor (5) by dripping or continuously pouring the lubricant (L).

8. The slide bearing device (10) according to claim 5 or 6, wherein
the lubricant inlet portion (7) at least includes a lubricant supply pipe disposed inside the housing (2) and to which the lubricant (L) is introduced from the outside, and
the lubricant supply pipe is disposed at a position opposite to the gravity acting direction (G) as viewed from the rotating shaft (6) of the vehicle driving motor (1) with respect to the rotating shaft (6), and includes one or more outflow ports disposed at positions for supplying the lubricant (L) toward the rotating shaft (6) and the rotor (5) by dripping or continuously pouring the lubricant (L).

9. The slide bearing device (10) according to any one of claims 1 to 8, wherein
the rotating shaft (6) of the vehicle driving motor (1) has a hollow shape, and an internal space of the rotating shaft (6) serves as an axial center flow path (6A) through which the lubricant (L) flows, and
the rotating shaft (6) at least includes an inlet port (61) provided on one end (65) side to introduce the lubricant (L) from the lubricant inlet portion (7) to the axial center flow path (6A), and an outflow port (63) opening from the axial center flow path (6A) toward the outer peripheral surface (6a) of the rotating shaft (6) and causing the lubricant (L) introduced to the axial center flow path (6A) to flow out by centrifugal force with rotation of the rotating shaft (6) to pour and supply the lubricant (L) to the outer peripheral surface (6a) of the rotating shaft (6).

10. The slide bearing device (10) according to any one of claims 1 to 9, wherein
the other openings of the communication paths (21) of the housing (2) open to the inside of the housing (2),
the lubricant (L) supplied to the inner peripheral surface (10b) of the metal substrate (10A) is discharged to the inside of the housing (2) through the opening paths (11) and the communication paths (21) and is stored in the inside of the housing (2),
a redundant part of the lubricant (L) supplied from the lubricant inlet portion (7) toward the rotating shaft (6) of the vehicle driving motor (1) falls into and is stored in the housing (2), and
a part of the lubricant (L) stored in the inside of the housing (2) is splashed with rotation of the rotor (5) and the rotating shaft (6) provided in the vehicle driving motor (1), and is resupplied toward the inner peripheral surface (10b) of the metal substrate (10A) to realize circulation of the lubricant (L).
